# EUROPÄISCHE PATENTSCHRIFT

(11) **EP 1 147 443 B1**
(45) Veröffentlichungstag und Bekanntmachung des Hinweises auf die Patenterteilung: **08.12.2004**
(21) Anmeldenummer: 99963162.5
(22) Anmeldetag: 22.12.1999
(51) Int. Cl.: G02B 6/38, H04L 12/28, H02G 3/16

(54) **KOMBINATION AUS EINEM NETZSTECKER UND EINEM DIGITALEN DATENSTECKER**
COMBINATION OF A POWER PLUG AND A DIGITAL DATA PLUG
COMBINAISON D'UNE FICHE DE SECTEUR ET D'UNE FICHE DE TRANSMISSION DE DONNEES NUMERIQUE

(30) Priorität: 22.12.1998 AT 215198
(43) Veröffentlichungstag der Anmeldung: 24.10.2001
(73) Patentinhaber: Faller, Josef, 9853 Gmünd (AT)
(72) Erfinder: Faller, Josef, 9853 Gmünd (AT)
(74) Vertreter: Hehenberger, Reinhard, Dipl.-Ing., Patentanwalt
(86) Internationale Anmeldenummer: PCT/AT1999/000313
(87) Internationale Veröffentlichungsnummer: WO 2000/037978

(56) Entgegenhaltungen:
- EP-A- 0 753 906
- EP-A- 0 772 132
- DE-A- 19 542 167
- US-A- 4 864 632

## Beschreibung

Die Erfindung betrifft eine Kombination aus einer in einer Unterputzdose oder einer Aufputzdose mit Montagerahmen angeordneten Netzsteckdose und einem Datenkonverter und/oder Datenrepeater mit einem Datenanschluß für einen Datenausgang.

Elektrotechnische Geräte im Bereich Privathaushalt und Gebäudetechnik können heute grob in vier Bereiche unterteilt werden:
- Haustechnik mit den Themen Energie und Haushalt,
- Computer, PC und dazugehörigen Peripheriegeräte,
- Unterhaltungselektronik
- Telekommunikation
In allen vier Bereichen hält zunehmend die Digitaltechnik und der Einsatz von Mini-Computern (Mikroprozessoren) Einzug. Dadurch ergibt sich die Möglichkeit der Datenvernetzung aller Bereiche und Anwendungen. Zur Zeit sind größtenteils lediglich die einzelnen Anwendungsbereiche in sich vernetzt. Die Vernetzung der Bereiche untereinander ist in der Vernetzung zwischen Telekommunikation und PC (z.B. Internet, ISDN etc.) am weitesten fortgeschritten.

Die Übertragung digitaler Daten erfolgt heute über Kupferkabel, Glas- oder Kunststoff-Lichtwellenleiter sowie über elektromagnetische wellen (RF) im Hochfrequenzbereich oder über Infrarot Übertragung. Verkabelungen werden in eigener, von der Netzversorgung getrennter Verrohrung oder in eigenen Kabelkanälen zu Datenauslässen (Steckdosen oder Steckkontakten) geführt.

Bei den optischen Übertragungsmedien unterscheidet man heute zwischen Glasfasern (Glas-Lichtwellenleiter, GOF), Kunststoff-Lichtwellenleitern (Plastic Optical Fiber, POF) und hybrid-optischen Kabeln (Hard Polymer Clad Fiber, HPCF etc.). Der Einsatz von Glas-Lichtwellenleitern ermöglicht hohe Übertragungslängen, die Montage von Steckverbindungen und Anschlüsse ist jedoch aufwendig. Der Einsatz von Kunststoff-Lichtwellenleitern (POF und HPCF, im folgenden Text nur POF bezeichnet) ermöglicht geringere Übertragungslängen aber einfache Anschlußtechnologien.

Durch das galvanisch night leitende Material werden GOF und POF als Medien zur parallelen Verkabelung mit spannungsführenden Leitungen eingesetzt.

Es gibt auch Netzsteckdosen mit integriertem optischen Anschluß. Diese besitzen jedoch keine integrierte aktive Signalverteilung oder Signal-Weiterführung.

Zur Vernetzung digitaler Signale etabliert sich zur Zeit ein Protokoll mit der Bezeichnung IEEE 1394-1995, welches 1995 standardisiert wurde.

Die approbierten und noch in Arbeit befindlichen Spezifikationen definieren sowohl die Übertragung über Kupferleitungen (6-Pin, 4-Pin und UTP5), über optische Kabel (POF, HCPF, GOF) als auch über Infrarot (IR) und Hochfrequenz (HF). Die Übertragungslänge ist je nach Übertragungsmedium, Frequenzbereich und eingesetztem Kabel begrenzt.

Die IEEE 1394 Technologie ermöglicht die Übertragung von Datenraten höher 100 MBit/s bis derzeit 800 MBit/s, in Zukunft bis 3200 MBit/s. Andere Übertragungsprotokolle sind z.B. Fast Ethernet, ATM, Fiberchannel.

Die Übertragung digitaler Signale (z.B. über IEEE 1394 oder ähnliche) erfordert zur Ein- bzw. Auskopplung von Signalen einen sogenannten Datenkonverter und/oder Datenrepeater (auch Repeater oder Signal-Repeater genannt). Dieser wird bei Einsatz eines galvanisch leitenden Kabels über das angeschlossene Gerät oder, wenn er in einem Gerät integriert ist, direkt von diesem mit Spannung versorgt. Wird ein Datenkonverter und/oder Datenrepeater mit optischen Anschlüssen ausgeführt, so muß er vom Gerät, in welches er integriert ist, über ein eigenes Netzgerät mit der Betriebsspannung versorgt werden.

Im Rahmen dieser Erfindung wird unter einem Datenrepeater eine Einrichtung verstanden, welche ein eingehendes, elekrisches oder optisches Signal in ein gleichartiges Signal an einem oder mehreren Ausgängen wieder herstellt. Unter Datenkonverter ist eine Einrichtung zu verstehen, die ein eingehendes elektrisches oder optisches Signal in ein anderes optisches oder elekterisches Signal an einem oder mehreren Ausgängen konvertiert bzw. umsetzt.

Im Rahmen dieser Erfindung körmen des weiteren Einrichtungen vorgesehen sein, die sowohl die Funktion eines Datenkonverters als auch eines Datenrepeaters erfüllen, d.h. daß z.B. ein eingehendes optisches Signal einerseits als optisches Signal über den Repeater und anderseits als elektrisches Signal über den Konverter weitergeführt wird.

Die Möglichkeiten der Digitaltechnik in unterschiedlichsten Anwendungen in den Bereichen Haustechnik, Multimedia-Anwendungen und PC's mit deren Peripheriegeräten ermöglichen heute eine Vernetzung von Geräten untereinander im Haus. Für die Installation eines hausinternen Datennetzwerks können verschiedene Medien verwendet werden wie Kupferleitungen (z.B. Netzleitungen, CAT5 Kabel, IEEE 1394 Standard Kabel, Koaxialkabel etc.), optische Leitungen (GOF, POF, PHOF etc.), RF-Übertragung und/oder IR-Übertragung. Das Medium mit der größten Übertragungs- und Störsicherheit ist die optische Leitung.

Durch den Einsatz von optischen Leitern (z.B. POF) kann die Übertragung über Distanzen von derzeit 50 bis 100 m realisiert werden. Dadurch eignet sich dieses Medium für die Installation von digitalen Breitband-Netzwerken im Haus. Durch das galvanisch nicht leitende Material kann eine POF-Leitung parallel mit Netzleitungen (220 - 380 V) in einem Rohr oder Kabelkanal verlegt werden. Anschlüsse und Steckverbinder können ohne großen Aufwand montiert werden.

Bei der Übertragung von Daten über einen IEEE 1394 Datenbus werden zur Ein- uns Auskopplung von Signalen spannungsversorgte Datenkonverter und/oder Datenrepeater eingesetzt. Ein- bzw. Ausgangsschnittstellen (Datenkonverter und/oder Datenrepeater) mit einem POF-Anschluß in einem Netzwerk, an denen nicht immer ein Gerät angeschlossen ist, das zur Spannungsversorgung herangezogen werden kann, müssen mit einer eigenen Spannungsversorgung ausgestattet sein. Um ein internes, digitales Verteilernetz mit POF-Datenkonverter und/oder -Datenrepeater realisieren zu können, das unabhängig von der Spannungsversorgung angeschlossener Geräte funktioniert, müssen die Datenkonverter und/oder Datenrepeater bei Verwendung von optischen Kabeln daher ortsgespeist (d.h. mit eigener Spannungsversorgung) ausgeführt sein.

Aus der US-A-4 864 632 ist eine gattungsgemäße Kombination bekannt, bei der eine Netzsteckdose, Anschlüsse für VHF/UHF Leitungen, ein Verstärker und ein Netzgerät in eine Dose integriert sind. Die Verbindung zwischen dem Netzgerät und der Netzsteckdose erfolgt über ein durch eine Öffnung in einer Zwischenwand geführtes Verbindungskabel.

Aus der DE-A 28 44 890-195 42 167 und aus der EP-A-0 753 906 sind elektrische Steckverbindungen bekannt, bei denen ein Datenanschluß in eine Netzsteckdose integriert ist. Des weiteren kann in diesen Dosen ein optoelektrischer Wandler bzw. Busankoppler enthalten sein, der die elektrischen Businformationen in optische umwandelt oder umgekehrt.

Der Erfindung liegt daher die Aufgabe zugrunde, eine Möglichkeit zu bieten, Datennetze mit Datenkonvertern und/oder Datenrepeatern zu installieren, die ohne Spannungsversorgung angeschlossener Geräte funktionieren.

Gelöst wird diese Aufgabe mit einer Kombination mit den Merkmalen des Anspruchs 1 oder des Anspruchs 2.

Bei der Erfindung kann die Installation eines digitalen Datennetzes sehr einfach dadurch realisiert werden, daß die gegebenenfalls schon bestehende Infrastruktur bzw. Verrohrung des Stromnetzes genutzt werden kann. Durch die Verwendung optischer Kabel (POF oder ähnliche) kann die Datenleitung in derselben Verrohrung parallel mit der Netzleitung verlegt werden. Damit steht am Netzauslaß (Netzsteckdose) auch ein digitaler Anschluß zur Verfügung. Bei Einsatz einer seriellen Bustechnologie (z.B. IEEE 1394 oder ähnlich) ist am Auslaß ein parallel aktiver Datenkonverter und/oder Datenrepeater mit einem vorzugsweise optischen Signaleingang und vorzugsweise optischen Signalausgang zur Signalweiterführung über ein vorzugsweise optisches Kabel angebracht. Ein oder mehrere Auslässe bzw. Stecker für Endgeräte befinden sich an der Vorderseite dieser Datendose. Der vorzugsweise optische Eingang und Ausgang befinden sich an der Rückseite bzw., je nach Ausführung, am Seitenteil der Datendose.

Der Datenkonverter und/oder Datenrepeater kann über ein Netzgerät, welches parallel zur Netzsteckdose geschaltet wird, versorgt werden. Dabei ist der Datenkonverter und/oder Datenrepeater so ausgeführt, daß entweder die Netzsteckdose und der Datenkonverter und/oder Datenrepeater modular miteinander vebindbar sind oder daß die Netzsteckdose und der Datenkonverter und/oder Datenrepeater in der Unterputzdose angeordnet sind.

Durch die Kombination aus Netzsteckdose und Datenkonverter und/oder Datenrepeater wird eine netzgespeiste Datenschnittstelle ermöglicht. Dadurch kann eine besonders einfache Neu- oder Nachinstallation eines Hochgeschwindigkeits-Datennetzes im Haus realisiert werden.

Da unterschiedliche Montageanforderungen im Haus abgedeckt werden sollen, können mehrere Varianten angewendet werden.

So kann die erfindungsgemäße Kombination einen netzgespeisten Datenkonverter und/oder Datenrepeater mit einem oder mehreren optischen und/oder galvanischen Anschlüssen (z.B. POF, HPCF oder UTP5 etc.) sowie einem oder mehreren seriellen Datenauslässen (z.B. IEEE 1394 6-Pin, 4-Pin, UTP5 od. POF) aufweisen. Der Datenkonverter und/oder Datenrepeater wird über ein eigenes Netzgerät mit der Betriebsspannung versorgt, welches in abgestimmter Bauweise mit den Netzanschlüssen einer Netzsteckdose verbunden ist bzw. in die Netzsteckdose integriert ist. Je nach Ausführung können die Netzanschlüsse fix verbunden (verlötet, gekrimpt, geschraubt etc.), steckbar oder über Federkontakte ausgeführt sein. Die optischen Anschlüsse können als Steckverbindungen oder direkte optische Anschlüsse ausgeführt sein.

Vorteilhafte Ausführungsformen sind Gegenstand der Unteransprüche.

Bevorzugte Ausführungsformen der Erfindung werden nachfolgend mit Bezug auf die angeschlossenen Zeichnungen näher beschrieben. Es zeigt:
- Fig. 1: ein technisches Prinzipschaltbild der gemeinsamen Verlegung einer Netzleitung und optischer Daten-Leitungen,
- Fig. 2: eine Vorderansicht einer ersten Ausführungsform der Erfindung mit aufgesetzter Abdeckung,
- Fig. 3: eine Fig. 2 entsprechende Ansicht mit abgenommener Abdekkung,
- Fig. 4: eine Seitenansicht der Ausführungsform von Fig. 2 und 3,
- Fig. 5: ein Detail der Ausführungsform der Fig. 2 bis 4,
- Fig. 6: eine Seitenansicht einer zweiten Ausführungsform, die nicht unter den Schutzbereich der Ansprüche fällt,
- Fig. 7: eine Vorderansicht der Ausführungsform von Fig. 6,
- Fig. 8: eine Seitenansicht einer dritten Ausführungsform, die nicht unter den Schutzbereich der Ansprüche fällt
- Fig. 9: eine Vorderansicht der Ausführungsform von Fig. 8 mit aufgesetzter Abdeckung,
- Fig. 10: eine Fig. 9 entsprechende Ansicht mit abgenommener Abdekkung,
- Fig. 11: eine vierte Ausführungsform der Erfindung in Seitenansicht bzw. Einbaulage,
- Fig. 12: die Ausführungsform von Fig. 11 in isolierter Darstellung, d.h. ohne Unterputzdose und Mauer,
- Fig. 13: die Ausführungsform von Fig. 12 in auseinandergezogener Darstellung,
- Fig. 14: eine Vorderansicht auf die Darstellung von Fig. 12,
- Fig. 15: detaillierter die Steckverbindung zwischen dem Datenrepeater-Modul und der Netzsteckdose,
- Fig. 16: eine fünfte Ausführungsform der Erfindung in Seitenansicht,
- Fig. 17: eine Vorderansicht auf die Dose von Fig. 16.

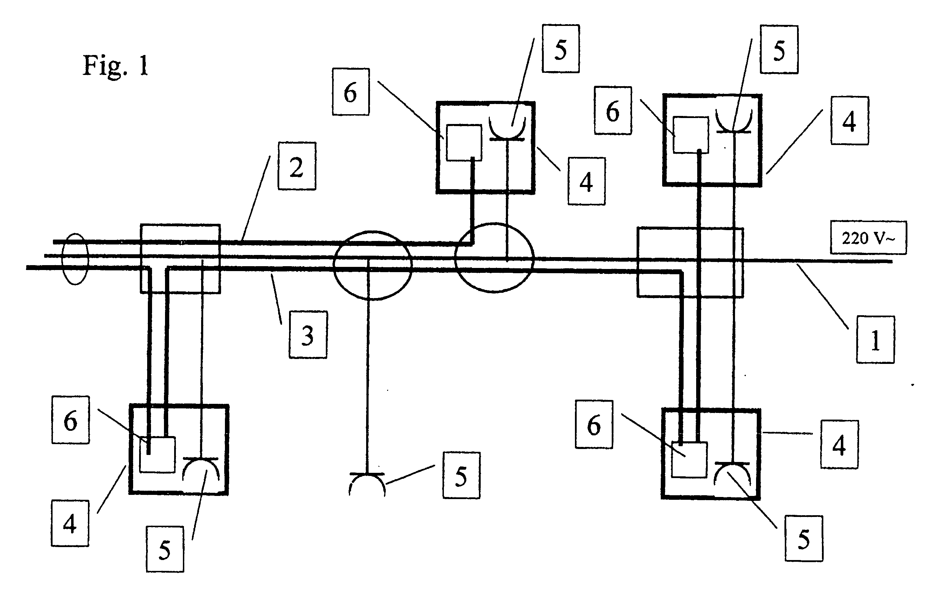

In Fig. 1 ist ein technisches Prinzipschaltbild der gemeinsamen Verlegung einer Netzleitung 1 und optischer Daten-Leitungen 2, 3 (POF) dargestellt, bei dem in schematisch dargestellten Dosen 4 Kombinationen von nebeneinander angeordneten Netzsteckdosen 5 und Datensteckkontakten 6 gezeigt sind.

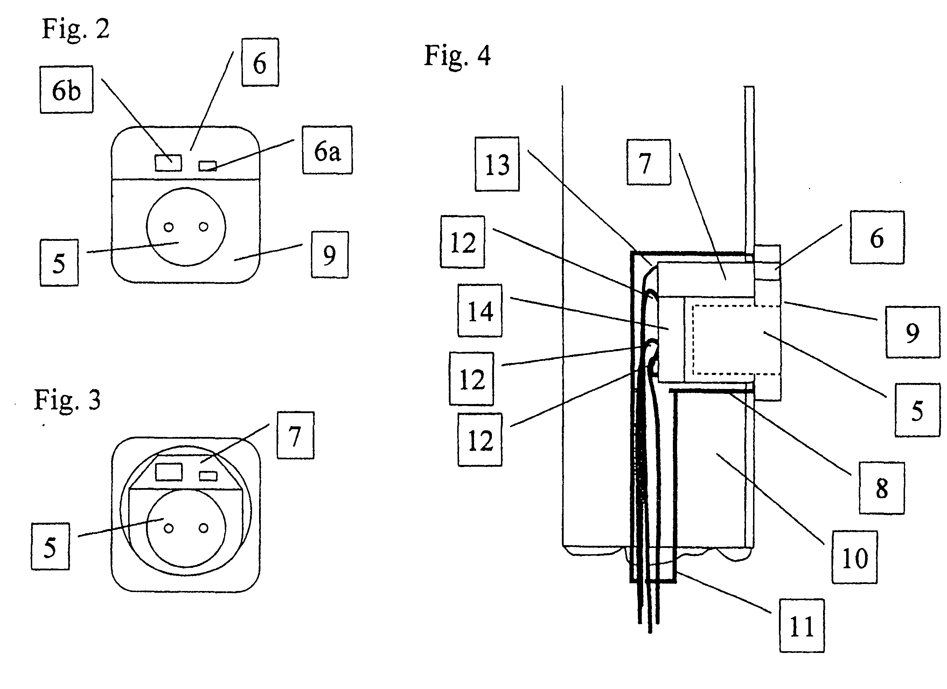

In den Fig. 2 bis 4 ist eine erste Ausführungsform der Erfindung im Detail dargestellt, bei der eine Netzsteckdose 5 und ein Datensteckkontakt 6 gemeinsam mit einem Datenkonverter 7 in einer Unterputzdose 8 angeordnet sind. In Fig. 2 ist die Dose in Vorderansicht mit aufgesetzter Abdeckung 9, in Fig. 3 mit abgenommener Abdeckung 9 und in Fig. 4 in Seitenansicht in einer Mauer 10 dargestellt. An der Unterseite der Unterputzdose 8 ist ein Rohr 11 an die Unterputzdose 8 herangeführt, in der die Netzleitungen 12 und die Datenleitung 13 liegen. Die Netzleitungen 12 sind an der Rückseite eines Netzgerätes 14 angeschlossen und führen weiter bis zur Netzsteckdose 5. Die Datenleitung 13 ist an die Rückseite des Datenkonverters 7 angeschlossen. Natürlich kann die Datenleitung 13 auch an anderer Stelle an den Datenkonverter und/oder Datenrepeater, z.B. seitlich, angeschlossen sein.

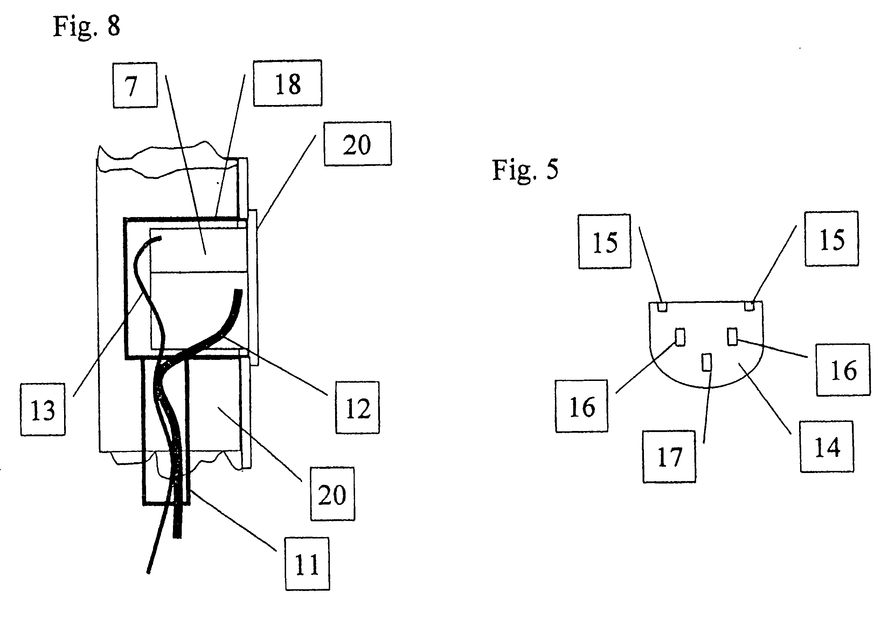

In Fig. 5 ist die der Netzsteckdose 5 zugewandte Seite des Netzgerätes 14 gezeigt. Es sind zwei Kontakte 15 zu sehen, denen entsprechende Kontakte am Datenkonverter 7 zugeordnet sind, die eine Steckverbindung zwischen Datenkonverter 7 und Netzgerät 14 bilden und über welche der Datenkonverter 7 vom Netzgerät 14 mit Niederspannung versorgt wird. Weiters sind Kontakte 16 und 17 zur Verbindung der Netzsteckdose 5 mit den Netzleitungen bzw. Erde zu sehen.

Am Datensteckkontakt 6 sind zwei Anschlüsse 6a und 6b vorgesehen (Fig. 2 und 3), die z.B. für einen 4-Pin Stecker und einen 6-Pin Stecker sein können..

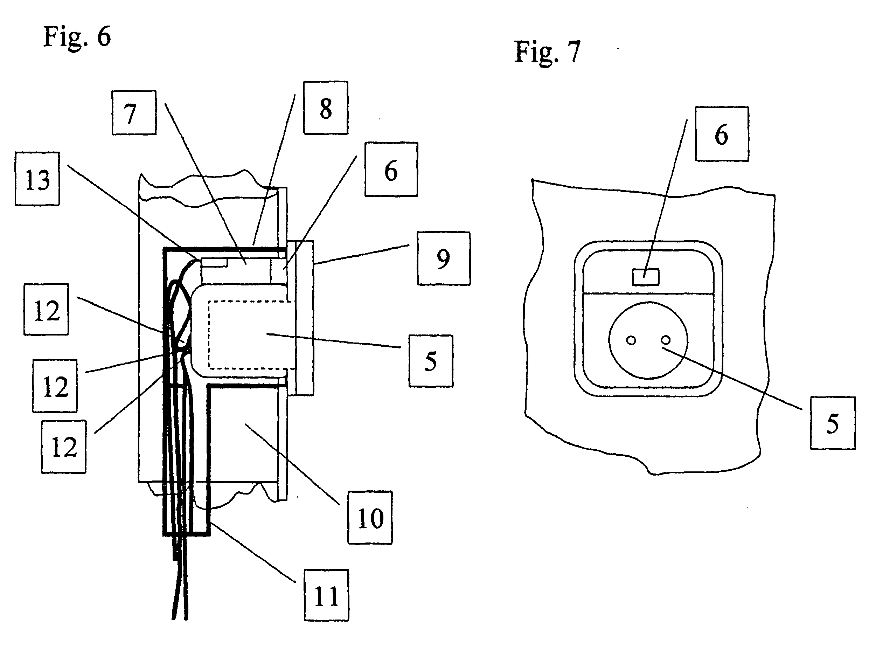

In den Fig. 6 und 7 ist eine Ausführungsform dargestellt, die weitgehend mit der Ausführungsform der Fig. 2 bis 5 übereinstimmt. Ein Unterschied besteht jedoch dahingehend, daß die Ausführungsform der Fig. 6 und 7 nicht mit einem Netzgerät ausgestattet ist. Das heißt, daß der Datenkonverter 7 vom angeschlossenen Endgerät aus spannungsversorgt sein muß.

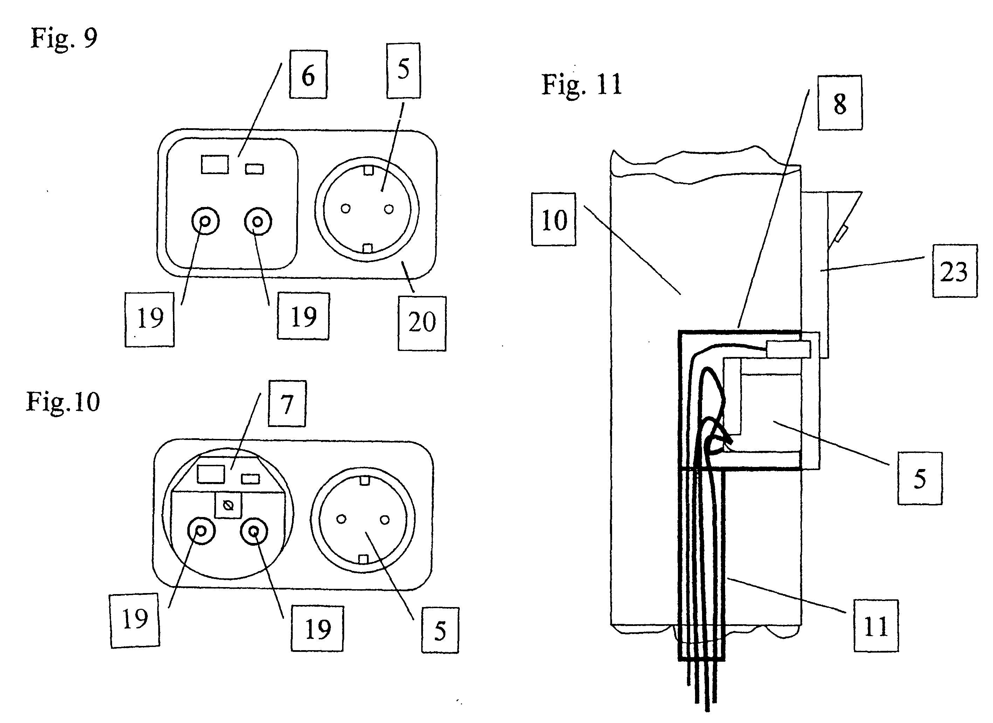

In den Fig. 8 bis 10 ist eine Ausführungsform dargestellt, bei der in einer Doppel-Unterputzdose 18 eine Netzsteckdose 5 und daneben ein Datensteckkontakt 6 angeordnet sind. Unter dem Datensteckkontakt 6 ist weiters noch Stecker 19 z.B. für TV- und Radio-Anschlüsse vorgesehen. Die Fig. 8 zeigt die Dose im Schnitt im Bereich des Datenkonverters 7 und der Stecker 19, die Fig. 9 eine Vorderansicht der Dose und Fig. 10 eine Vorderansicht der Dose bei abgenommener Abdeckung 20. Es versteht sich, daß die TV- und Radio-Anschlüsse natürlich auch weggelassen werden können.

Zur Spannungsversorgung ist bei dieser Ausführungsform eine nicht dargestellte Kabelverbindung zwischen dem Netzgerät und dem Datenkonverter 7 erforderlich, da das Netzgerät wie vorher direkt hinter der Netzsteckdose 5 und somit räumlich vom Datenkonverter 7 entfernt angeordnet ist.

In der Folge werden Ausführungsformen der Erfindung beschrieben, bei denen der Datenkonverter nicht gemeinsam mit der Netzsteckdose in eine Unterputzdose 8 integriert ist sondern als Modul an der Unterputzdose bzw. der Netzsteckdose angebracht ist.

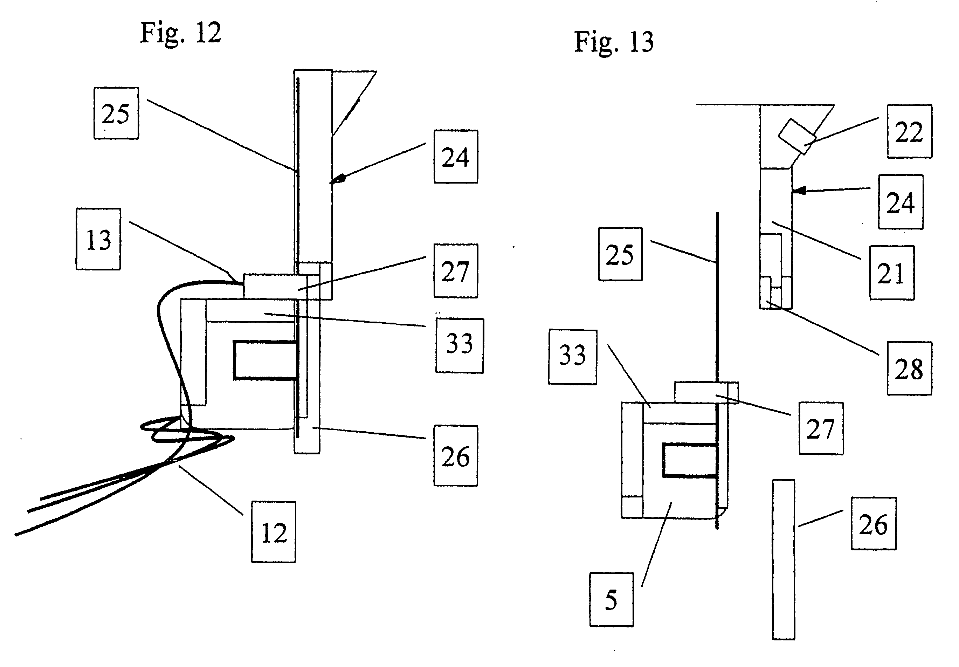

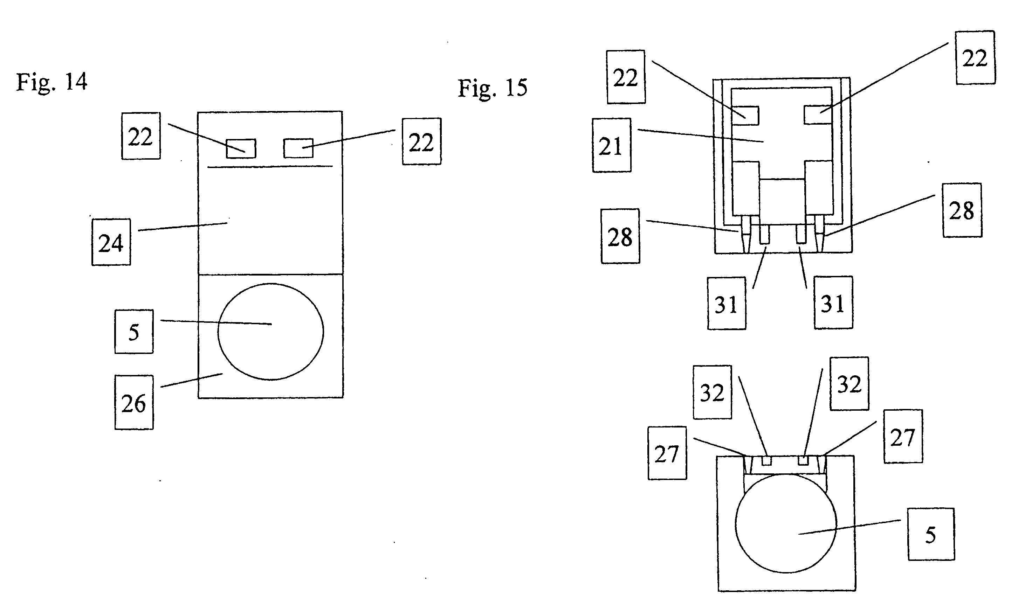

Die Fig. 11 bis 15 zeigen eine erste derartige Ausführungsform, bei der eine Netzsteckdose 5 wieder in einer unterputzdose 8 in einer Mauer 10 angeordnet ist. Der Datenrepeater 21 mit den Datensteckkontakten 22 ist in eine Steckdosen-Abdeckung 23 integriert und als Modul 24 ausgeführt, das über eine Montageplatte 25 und eine Abdekkung 26 an der Unterputzdose 8 befestigbar ist. Das Netzgerät 33 für die Spannungsversorgung des Datenrepeater 21 ist in die unterputzdose 8 integriert und an der Netzsteckdose 5. angeordnet. Die Verbindung zwischen Netzgerät 33 und Datenrepeater 21 ist wieder als Steckkontaktverbindung 31, 32 ausgeführt. Der optische Leiter 13 ist an Stecker 27 angeschlossen, die mit korrespondierenden Steckerteilen 28 die Verbindung zum Datenrepeater 21 herstellt.

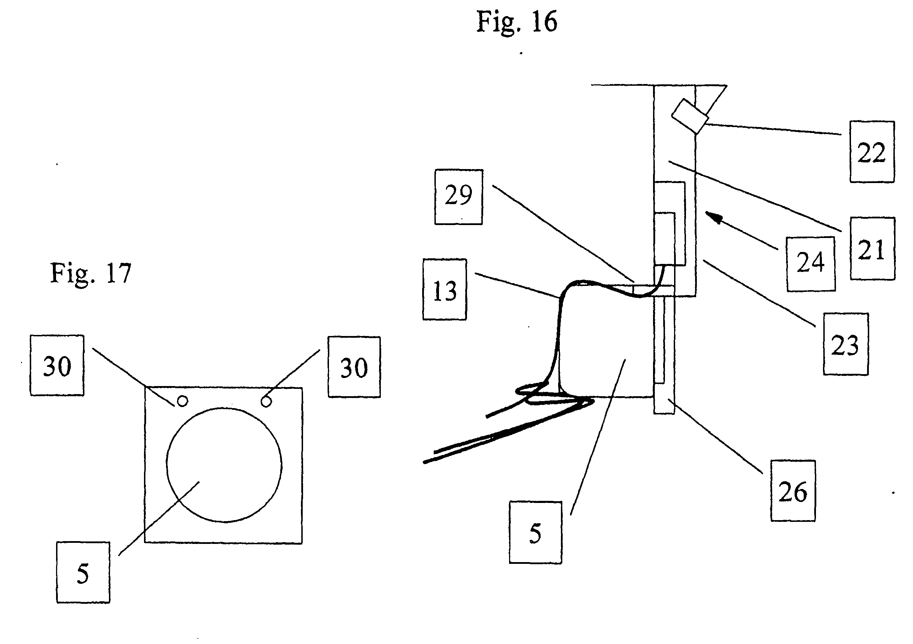

In den Fig. 16 und 17 ist eine Ausführungsform dargestellt, die sich von der Ausführungsform der Fig. 11 bis 13 dadurch unterscheidet, daß sich das Netzgerät des Datenrepeaters 21 im Modul 24 und nicht in der Unterputzdose 8 befindet. Die elektrische Verbindung zwischen der Netzsteckdose 5 und Netzgerät erfolgt durch Federkontakte 29 am Modul 24 und 30 an der Netzsteckdose 5. Außerdem wird die optische Leitung 13 über einen Substecker direkt in den Datenrepeater 21 geführt.

Die Anschlüsse aller Varianten können in unterschiedlichen Kombinationen ausgeführt sein. Für Endgeräte (Front-Anschlüsse) kommen unterschiedliche standardisierte Steckverbindungen zum Einsatz. Die Erfindung ist nur auf die Merkmale der unabhängigen Ansprüche beschränkt. An den Daten konverter und/oder Daten repeater ist ein optisches Kabel anschließbar.

Ebenso können bei allen beschriebenen Ausführungsformen Datenkonverter und/oder Datenrepeater den jeweiligen Erfordernissen entsprechend ausgetauscht oder kombiniert werden.

Kombinationsbeispiele hierfür sind:

| **Eingang 1 (vom Netzwerk)** | **Ausgang 1 (zum Netzwerk)** | **Anschluß 1** | **Anschluß 2 oder mehrfach** |
|---|---|---|---|
| POF | POF | 6 Pin oder 4 Pin oder Cat5 etc | |
| POF | POF | 6 Pin oder 4 Pin oder Cat5 etc | 6 Pin oder 4 Pin oder Cat5 etc |
| POF | POF | POF | 6 Pin oder 4 Pin oder Cat5 etc |
| POF | POF | POF | POF |
| 6 Pin oder 4 Pin oder Cat5 etc | 6 Pin oder 4 Pin oder Cat5 etc | POF | ------ |
| 6 Pin oder 4 Pin oder Cat5 etc | 6 Pin oder 4 Pin oder Cat5 etc | POF | POF |
| 6 Pin oder 4 Pin oder Cat5 etc | 6 Pin oder 4 Pin oder Cat5 etc | POF | 6 Pin oder 4 Pin oder Cat5 etc |
| POF | ------ | 6 Pin oder 4 Pin oder Cat5 etc | ------ |
| POF | ------ | 6 Pin oder 4 Pin oder Cal5 etc | 6 Pin oder 4 Pin oder Cat5 etc |
| POF | ------ | POF | 6 Pin oder 4 Pin oder Cat5 etc |
| POF | ------ | POF | POF |
| 6 Pin oder 4 Pin oder Cat5 etc | ------ | POF | ------ |
| 6 Pin oder 4 Pin oder Cat5 etc | ------ | POF | POF |
| 6 Pin oder 4 Pin oder Cat5 etc | ------ | POF | 6 Pin oder 4 Pin oder Cat5 etc |
| 6 Pin oder 4 Pin oder Cat5 etc | ------ | 6 Pin oder 4 Pin oder Cat5 etc | 6 Pin oder 4 Pin oder Cat5 etc |
| 6 Pin oder 4 Pin oder Cat5 etc | ------ | 6 Pin oder 4 Pin oder Cat5 etc | 6 Pin oder 4 Pin oder Cat5 etc |

Durch den kombinierten Aufbau von Datenkonverter und/oder Datenrepeater und Netzsteckdose können bestehende Steckdosenauslässe durch Datenauslässe erweitert werden. Der besondere Vorteil liegt in der Nachrüstbarkeit bzw. Nutzung bestehender Installationsinfrastrukturen mit optischen Datenleitungen, da das optische Datenkabel parallel zur Netzleitung verlegt werden, bzw. in bestehende Verrohrung nachgezogen werden kann. Dadurch kann mit einfachen Mitteln, ohne hohen Installationsaufwand ein digitales Datennetzwerk im Haus oder Wohnungsbereich realisiert werden.

Es wird noch festgehalten, daß im Rahmen dieser Erfindung eine Aufputzdose mit Montagerahmen funktionell einer Unterputzdose entspricht und die Erfindung auf Aufputzdosen mit Montagerahmen ebenso anwendbar ist.

## Patentansprüche

1. Kombination aus einer in einer Unterputzdose (8, 18) oder einer Aufputzdose mit Montagerahmen angeordneten Netzsteckdose (5) und einem Datenkonverter und/oder Datenrepeater (7, 21) mit einem Datenanschluß (6) für einen Datenausgang, wobei die Netzsteckdose (5) einen Anschluß (16, 17, 29, 30) für ein Netzgerät (14, 33) aufweist, über welches der Datenkonverter und/oder Datenrepeater (7, 21) spannungsversorgt werden kann, und wobei die Netzsteckdose (5) und der Datenanschluß (6) nebeneinander angeordnet sind, und wobei die Netzsteckdose (5) und der Datenanschluß (6) mit dem Datenkonverter und/oder Datenrepeater (7, 21) zu einer Baueinheit verbindbar sind, **dadurch gekennzeichnet, daß** an den Datenkonverter und/oder Datenrepeater (7, 21) ein optisches Kabel anschließbar ist, und daß der Anschluß (16, 17, 29, 30) für das Netzgerät (14, 33) ein direkter Feder - oder Steckkontakt zwischen Netzsteckdose (5) und Netzgerät (14, 33) ist.

2. Kombination aus einer in einer Unterputzdose (8, 18) oder einer Aufputzdose mit Montagerahmen angeordneten Netzsteckdose (5) und einem Datenkonverter und/oder Datenrepeater (7, 21) mit einem Datenanschluß (6) für einen Datenausgang, wobei die Netzsteckdose (5) einen Anschluß (16, 17, 29, 30) für ein Netzgerät (14, 33) aufweist, über welches der Datenkonverter und/oder Datenrepeater (7, 21)) spannungsversorgt werden kann, und wobei die Netzsteckdose (5) und der Datenanschluß (6) nebeneinander angeordnet sind, und wobei die Netzsteckdose (5) und der Datenanschluß (6) mit dem Datenkonverter und/oder Datenrepeater (7, 21) zu einer Baueinheit verbindbar sind, **dadurch gekennzeichnet, daß** an den Datenkonverter und/oder Datenrepeater (7, 21) ein optisches Kabel anschließbar ist, und daß das Netzgerät (14, 33) in die Netzsteckdose (5) integriert ist.

3. Kombination nach Anspruch 1 oder 2, **dadurch gekennzeichnet, daß** die Verbindung (15, 31, 32) zwischen Netzsteckdose und Datenkonverter und/oder Datenrepeater ein vorzugsweise direkter Steckkontakt ist.

4. Kombination nach einem der Ansprüche 1 bis 3, **dadurch gekennzeichnet, daß** die Netzsteckdose (5) und der Datenkonverter und/oder Datenrepeater (7, 21) sowie das Netzgerät (14, 33) in der Unterputzdose (8, 18) oder Aufputzdose angeordnet sind.

5. Kombination nach einem der Ansprüche 1 bis 3, **dadurch gekennzeichnet, daß** die Netzsteckdose (5) und der Datenkonverter und/oder Datenrepeater (7, 21) modular miteinander verbindbar sind.

6. Kombination nach Anspruch 5, **dadurch gekennzeichnet, daß** das Netzgerät (14, 33) in der Unterputzdose (8, 18) angeordnet ist.

7. Kombination nach Anspruch 5, **dadurch gekennzeichnet, daß** das Netzgerät (14, 33) in das Modul (24) mit dem Datenkonverter und/oder Datenrepeater (7, 21) integriert ist.

8. Kombination nach einem der Ansprüche 5 bis 7, **dadurch gekennzeichnet, daß** der Datenkonverter und/oder Datenrepeater (7, 21) zur Spannungsversorgung über an der Netzsteckdose (5) und am Datenkonverter und/oder Datenrepeater (7, 21) angeordnete Steckkontakte (29, 30, 31, 32) erfolgt.

9. Kombination nach einem der Ansprüche 1 bis 8, **dadurch gekennzeichnet, daß** die Datenzuleitung (13) zum Datenkonverter und/oder Datenrepeater (7, 21) und/oder die Datenableitung vom Datenkonverter und/oder Datenrepeater ein optisches Kabel ist.

10. Kombination nach Anspruch 11, **dadurch gekennzeichnet, daß** das optische Kabel (13) über einen optischen Stecker (27) an den Datenkonverter und/oder Datenrepeater (7, 21) angeschlossen ist.

11. Kombination nach Anspruch 9, **dadurch gekennzeichnet, daß** das optische Kabel (13) über eine Anschlußvorrichtung ohne optischen Stecker direkt an den Datenkonverter und/oder Datenrepeater (7, 21) angeschlossen ist.

12. Kombination nach einem der Ansprüche 1 bis 11, **dadurch gekennzeichnet, daß** der Datenkonverter und/oder Datenrepeater (7, 21) wenigstens zwei Datenanschlüsse (6a, 6b) für optische Kabel aufweist.

13. Kombination nach Anspruch 12, **dadurch gekennzeichnet, daß** ein Datenanschluß für ein optisches Kabel hinter einer Abdeckung (9, 26) für die Netzsteckdose (5) bzw. den Datenkonverter und/oder Datenrepeater (7, 21) angeordnet ist.

## Claims

1. Combination of a power plug (5), arranged in a flush box (8, 18) or a surface box with a mounting frame, and a data converter and/or data repeater (7, 21) having a data connection (6) for data output, the power plug (5) having a connection (16, 17, 29, 30) for a power pack (14, 33) via which the data converter and/or data repeater (7, 21) can be supplied with power, and the power plug (5) and the data connection (6) being arranged beside one another and being capable of being connected with the data converter and/or data repeater (7, 21) to form a modular unit, **characterised in that** an optical cable may be connected to the data converter and/or data repeater (7, 21) and **in that** the connection (16, 17, 29, 30) for the power pack (14, 33) is a direct spring contact or plug-in contact between the power plug (5) and the power pack (14, 33).

2. Combination of a power plug (5), arranged in a flush box (8, 18) or a surface box with a mounting frame, and a data converter and/or data repeater (7, 21) having a data connection (6) for data output, the power plug (5) having a connection (16, 17, 29, 30) for a power pack (14, 33) via which the data converter and/or data repeater (7, 21) can be supplied with power, and the power plug (5) and the data connection (6) being arranged beside one another and being capable of being connected with the data converter and/or data repeater (7, 21) to form a modular unit, **characterised in that** an optical cable may be connected to the data converter and/or data repeater (7, 21) and **in that** the power pack (14, 33) is integrated into the power plug (5).

3. Combination according to claim 1 or 2, **characterised in that** the connection (51, 31, 32) between power plug and data converter and/or data repeater is a preferably direct plug-in contact.

4. Combination according to one of claims 1 to 3, **characterised in that** the power plug (5) and the data converter and/or data repeater (7, 21) as well as the power pack (14, 33) are arranged in the flush box (8, 18) or surface box.

5. Combination according to one of claims 1 to 3, **characterised in that** the power plug (5) and the data converter and/or data repeater (7, 21) may be connected to one another in modular fashion.

6. Combination according to claim 5, **characterised in that** the power pack (14, 33) is arranged in the flush box (8, 18).

7. Combination according to claim 5, **characterised in that** the power pack (14, 33) is integrated into the module (24) with the data converter and/or data repeater (7, 21).

8. Combination according to one of claims 5 to 7, **characterised in that** the data converter and/or data repeater (7, 21) are supplied with power via plug-in contacts (29, 30, 31, 32) arranged on the power plug (5) and on the data converter and/or data repeater (7, 21).

9. Combination according to one of claims 1 to 8, **characterised in that** the incoming data cable (13) to the data converter and/or data repeater (7, 21) and/or the outgoing data cable from the data converter and/or data repeater is an optical cable.

10. Combination according to claim 11, **characterised in that** the optical cable (13) is connected to the data converter and/or data repeater (7, 21) via an optical plug (27).

11. Combination according to claim 9, **characterised in that** the optical cable (13) is connected directly to the data converter and/or data repeater (7, 21) via a connection device without any optical plug.

12. Combination according to one of claims 1 to 11, **characterised in that** the data converter and/or data repeater (7, 21) has at least two data connections (6a, 6b) for optical cables.

13. Combination according to claim 12, **characterised in that** a data connection for an optical cable is arranged behind a cover (9, 26) for the power plug (5) or respectively the data converter and/or data repeater (7, 21) .

## Revendications

1. Combinaison d'une prise de secteur (5), disposée dans une prise de courant sous crépi (8, 18) ou dans une prise de courant sur crépi comportant un châssis de montage, avec un convertisseur de données et/ou un répétiteur de données (7, 21), ainsi qu'avec un raccordement de données (6) pour une sortie de données, la prise de secteur (5) présentant un raccordement (16, 17, 29, 30) pour un bloc-secteur (14, 33), par l'intermédiaire duquel le convertisseur de données et/ou le répétiteur de données (7, 21) peut être alimenté en tension, la prise de secteur (5) et le raccordement de données (6) étant disposés l'un à côté de l'autre, la prise de secteur (5) et le raccordement de données (6) pouvant être reliés au convertisseur de données et/ou au répétiteur de données (7, 21) de manière à former un ensemble, **caractérisé en ce qu'**un câble optique peut être raccordé au convertisseur de données et/ou au répétiteur de données (7, 21) et **en ce que** le raccordement (16, 17, 29, 30) pour le bloc-secteur (14, 33) est un contact direct à ressort ou à fiche entre la prise de secteur (5) et le bloc-secteur (14, 33).

2. Combinaison d'une prise de secteur (5), disposée dans une prise de courant sous crépi (8, 18) ou dans une prise de courant sur crépi comportant un châssis de montage, avec un convertisseur de données et/ou un répétiteur de données (7, 21), ainsi qu'avec un raccordement de données (6) pour une sortie de données, la prise de secteur (5) présentant un raccordement (16, 17, 29, 30) pour un bloc-secteur (14, 33), par l'intermédiaire duquel le convertisseur de données et/ou le répétiteur de données (7, 21) peut être alimenté en tension, la prise de secteur (5) et le raccordement de données (6) étant disposés l'un à côté de l'autre, la prise de secteur (5) et le raccordement de données (6) pouvant être reliés au convertisseur de données et/ou au répétiteur de données (7, 21) de manière à former un ensemble, **caractérisé en ce qu'**un câble optique peut être raccordé au convertisseur de données et/ou au répétiteur de données (7,21) et **en ce que** le bloc-secteur (14, 33) est intégré dans la prise de secteur (5).

3. Combinaison suivant la revendication 1 ou 2, **caractérisée en ce que** la liaison (15, 31, 32) entre la prise de secteur et le convertisseur de données et/ou le répétiteur de données est, de préférence, un contact à fiche direct.

4. Combinaison suivant une des revendications 1 à 3, **caractérisée en ce que** la prise de secteur (5) et le convertisseur de données et/ou le répétiteur de données (7, 21), ainsi que le bloc-secteur (14, 33) sont disposés dans la prise de courant sous crépi (8, 18) ou dans la prise de courant sur crépi.

5. Combinaison suivant une des revendications 1 à 3, **caractérisée en ce que** la prise de secteur (5) et le convertisseur de données et/ou le répétiteur de données (7, 21) peuvent être reliés entre eux de façon modulaire.

6. Combinaison suivant la revendication 5, **caractérisée en ce que** le bloc-secteur (14, 33) est disposé dans la prise de courant sous crépi (8,18).

7. Combinaison suivant la revendication 5, **caractérisée en ce que** le bloc-secteur (14, 33) est intégré dans le module (24) avec le convertisseur de données et/ou le répétiteur de données (7, 21).

8. Combinaison suivant une des revendications 5 à 7, **caractérisée en ce que** le convertisseur de données et /ou le répétiteur de données (7, 21) est alimenté en tension au moyen de contacts à fiche (29, 30, 31, 32) disposés sur la prise de secteur (5) et sur le convertisseur de données et/ou le répétiteur de données (7, 21).

9. Combinaison suivant une des revendications 1 à 8, **caractérisée en ce que** la ligne de transmission de données (13) vers le convertisseur de données et/ou vers le répétiteur de données (7, 21) et/ou la ligne de transmission de données depuis le convertisseur de données et/ou le répétiteur de données est un câble optique.

10. Combinaison suivant la revendication 11, **caractérisée en ce que** le câble optique (13) est raccordé au convertisseur de données et/ou au répétiteur de données (7, 21) par l'intermédiaire d'une fiche optique.

11. Combinaison suivant la revendication 9, **caractérisée en ce que** le câble optique (13) est raccordé directement au convertisseur de données et/ou au répétiteur de données (7, 21) par l'intermédiaire d'un dispositif de raccordement sans fiche optique.

12. Combinaison suivant une des revendications 1 à 11, **caractérisée en ce que** le convertisseur de données et/ou le répétiteur de données (7, 21) présente au moins deux raccordements de données (6a, 6b) pour câble optique.

13. Combinaison suivant la revendication 12, **caractérisée en ce qu'**un raccordement de données pour un câble optique est disposé derrière un cache (9, 26) pour la prise de secteur (5), à savoir le convertisseur de données et/ou le répétiteur de données (7, 21).
